# EUROPÄISCHE PATENTSCHRIFT

(11) **EP 1 436 171 B1**
(45) Veröffentlichungstag und Bekanntmachung des Hinweises auf die Patenterteilung: **16.11.2005**
(21) Anmeldenummer: 02772034.1
(22) Anmeldetag: 29.08.2002
(51) Int. Cl.: B60R 21/01

(54) **VORRICHTUNG ZUM ANSCHLUSS AN EINE LEITUNG**
DEVICE FOR PROVIDING A CONNECTION TO A LINE
DISPOSITIF DE RACCORDEMENT A UNE LIGNE

(30) Priorität: 05.10.2001 DE 10149119
(43) Veröffentlichungstag der Anmeldung: 14.07.2004
(73) Patentinhaber: ROBERT BOSCH GMBH, 70442 Stuttgart (DE)
(72) Erfinder: NITSCHKE, Werner, 71254 Ditzingen (DE); MEIER, Klaus-Dieter, 71229 Leonberg (DE); MAURITZ, Ewald, 71287 Weissach (DE); BUEHRING, Heiko, 26125 Oldenburg (DE)
(86) Internationale Anmeldenummer: PCT/DE2002/003173
(87) Internationale Veröffentlichungsnummer: WO 2003/032440

(56) Entgegenhaltungen:
- WO-A-98/36949
- DE-A- 19 820 691
- US-A- 5 856 710
- US-A- 6 129 560
- US-A- 6 166 452
- US-B1- 6 227 115
- US-B1- 6 275 756

## Beschreibung

### Stand der Technik

Die Erfindung geht aus von einer Vorrichtung zum Anschluss an eine Leitung nach der Gattung des unabhängigen Patentanspruchs. Eine solche Vorrichtung ist aus dem amerikanischen Patentschrift US6129560A bekannt.

Aus der Offenlegungsschrift DE 198 20 691 A1 ist bereits ein Steckerteil für ein Kabelbaum eines Kraftfahrzeugs bekannt, das auch zum Anschluss an einen Bus weiterbildbar ist. Dieser Stecker enthält eine Widerstandscodierung für eine jeweilige Busstation. Über eine Leitung, vorzugsweise über einen Bus, ist der Steckerteil mit einem Steuergerät für Rückhaltemittel verbindbar.

### Vorteile der Erfindung

Die erfindungsgemäße Vorrichtung zum Anschluss an eine Leitung mit den Merkmalen des unabhängigen Patentanspruchs hat demgegenüber den Vorteil, dass die erfindungsgemäße Vorrichtung als Zündpillenstecker mit üblichen Zündpillen verbindbar ist, so dass die Einführung eines Bussystems für Rückhaltemittel besonders einfach wird. Weiterhin wird die kostengünstige Leitungs- bzw. der Busanbindung einfacher konventioneller Sensoren wie beispielsweise von Gurtschlossschaltern durch Mehrfachnutzung der Buselektronik möglich. Weiterhin liegt eine hardwaremäßige Einbindung von für die Zündentscheidung relevanten Sensoren in den Zündschaltkreis zur Erhöhung der Sicherheit bei der Auslöseentscheidung vor.

Insbesondere ist dabei von Vorteil, dass die Schnittstellen-elektronik zur Anbindung an die Leitung, also vorzugsweise eine Busschnittstellenelektronik, die Auswerteschaltung für Sensorsignale sowie die Zündkreiselektronik in einem einzigen Stecker zusammen integriert sind. Der Teil des Pillensteckers, der die Verbindung zur Zündpille selbst herstellt, ist hierbei in der für nicht integrierte Zündpillen üblichen Formen ausgeführt. Über eine elektrische Verbindung wird ein Sensor an die erfindungsgemäße Vorrichtung angebunden. Das Sensorsignal wird über eine entsprechende Schaltung in den Zündkreis und in Statusinformationen eingefügt. Alternativ kann die Sensorinformation auch nur in die Statusinformation allein einfließen.

Durch die in den abhängigen Ansprüchen aufgeführten Maßnahmen und Weiterbildungen sind vorteilhafte Verbesserungen der im unabhängigen Patentanspruch angegebenen Vorrichtung zum Anschluss an eine Leitung möglich.

Besonders vorteilhaft ist, dass die Schnittstellenelektronik zum Anschluss an einen Bus ausgebildet ist also als eine Busschnittstellenelektronik. Dabei weist dann die Schnittstellenelektronik einen Sender, einen Empfänger, wenigstens ein Register und eine Ablaufsteuerung auf.

Weiterhin ist es von Vorteil, dass bei einer Ausbildung des Busses als Daisy Chain die Schnittstellenelektronik weiterhin einen Daisy Chain-Schalter aufweist.

Schließlich ist es auch von Vorteil, dass die Zündkreiselektronik wenigstens einen Zündkreis, wenigstens ein Statusregister, wenigstens eine Zündbrückenschaltung und eine Verknüpfungsschaltung für einen empfangenen Zündbefehl und ein Ausgangssignal von der Auswerteschaltung aufweist.

### Zeichnung

Ausführungsbeispiele der Erfindung sind in der Zeichnung dargestellt und werden in der nachfolgenden Beschreibung näher erläutert. Es zeigt Figur 1 eine schematische Darstellung der erfindungsgemäßen Vorrichtung in Zusammenschaltung mit Sensorbus und Zündpille, Figur 2 ein erstes Blockschaltbild der erfindungsgemäßen Vorrichtung und Figur 3 ein zweites Blockschaltbild der erfindungsgemäßen Vorrichtung.

### Beschreibung

Zur Senkung der Gesamtkosten und zur Erhöhung der Verfügbarkeit eines Rückhaltesystems in der Automobiltechnik werden seit Anfang/Mitte der 90er Jahre Restraint Bussysteme entwickelt. Dies hat jedoch zur Folge, dass Elektronik im allgemeinen zu jedem Busteilnehmer, Sensor- oder Zündmodul, ausgelagert werden muss. Dieses erhöht wiederum die Kosten für jede Einzelfunktion eines Rückhaltesystems.

Erfindungsgemäß wird nun eine Vorrichtung zum Anschluss an eine Leitung vorgeschlagen, bei der in einem Gehäuse eine Schnittstellenelektronik einer Auswerteschaltung für Sensorsignale und eine Zündkreiselektronik integriert sind. Die erfindungsgemäße Vorrichtung weist Verbindungen zum Bus bzw. Leitung, zur Zündpille und zum Sensor auf. Damit steht ein Modul zur Verfügung, das sowohl die Sensorsignale verarbeiten bzw. weiterleiten und auch die Zündpillen ansteuern kann. Dies reduziert erheblich die Anzahl der notwendigen Busstationen in einem Rückhaltesystembus. Aber auch wenn Zweidrahtleitungen für jedes Modul verwendet werden, wird so die Zahl der Leitungen erheblich reduziert.

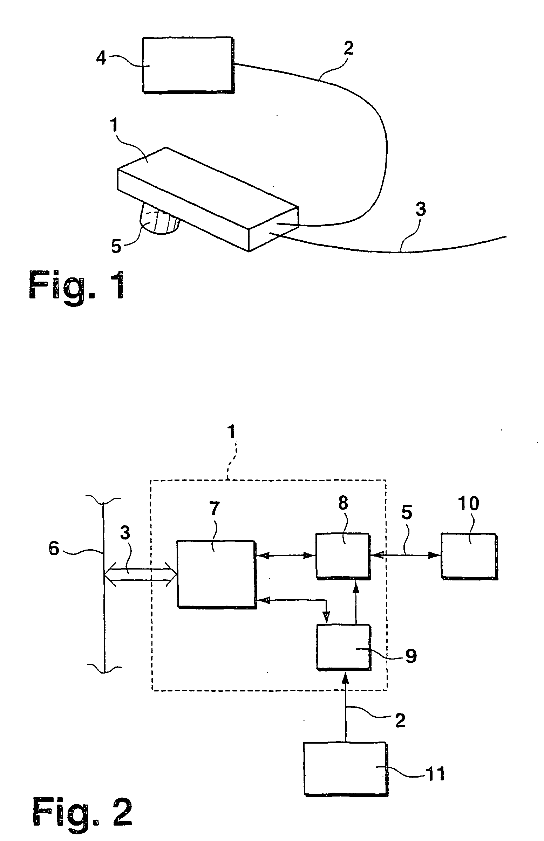

Figur 1 zeigt schematisch, wie der erfindungsgemäße Zündpillenstecker 1 mit anderen Komponenten verbunden ist. Der Zündpillenstecker 1 mit einem Gehäuse, in dem sich die Elektronik zur Auswertung der Sensorsignale und zur Ansteuerung der Zündpillen sowie zur Kommunikation über den Bus befindet, ist über eine erste Leitung 2 mit einem Sensor 4 verbunden. Bei dem Sensor 4 kann es sich um einen Aufprallsensor. Hier kann es sich beispielsweise um einen Gurtschlusssensor oder einen Insassenerkennungssensor wie eine Sitzmatte handeln, wobei hier auch die anderen Möglichkeiten zur Insassenerkennung wie Videosensor, Radarsensor usw. möglich sind. Über eine zweite Leitung 3 erfolgt die Busanbindung des Zündpillensteckers. Weitere mögliche Sensoren sind Beschleunigungs-, Druck-, Temperatur- und Verformungssensoren.

Schließlich ist noch eine Zündpillenanbindung 5 vorgesehen, an die eine konventionelle Zündpille ohne Elektronik anschließbar ist. Weiterbildung kann vorgesehen sein, dass mehr als ein Sensor an einen solchen Zündpillenstecker anschließbar ist.

Figur 2 zeigt in einem ersten Blockschaltbild den inneren Aufbau der erfindungsgemäßen Vorrichtung. Innerhalb des Gehäuses 1 des Zündpillensteckers befindet sich eine Busschnittstellenelektronik 7, die über einen Datenein- /ausgang 3 mit einem Bus 6 verbunden ist. Alternativ ist es hier möglich, dass eine Verbindung über eine Zweidrahtleitung vorgesehen sein kann, aber auch dann ist ein entsprechender Schnittstellenbaustein vorhanden.

Über den Bus 6 erfolgt auch die Energieversorgung des erfindungsgemäßen Zündpillensteckers 1. Es liegt also eine sogenannte Powerlineübertragung vor. Alternativ ist es möglich, eine dafür vorgesehene Leitung zur Energieversorgung zu verwenden und über den Bus allein den Datenverkehr abzuwickeln.

Über einen zweiten Datenein- /ausgang ist der Busschnittstellenbaustein mit einer Zündkreiselektronik 8 und über einon zweiten Datenein- /ausgang mit einer Auswerteschaltung 9 für Sensorsignale verbunden. Die Zündkreiselektronik 8 ist über einen zweiten Datenein- /ausgang mit einer Leitung 5 verbunden, also der Zündpillenanbindung, an die dann die Zündpille 10 angeschlossen ist. Über einen Datenausgang ist die Auswerteschaltung 9 mit der Zündkreiselektronik 8 verbunden. Über einen Dateneingang ist die Auswerteschaltung 9 mit dem Sensor 11 verbunden. Dazu wird die Leitung 2 verwendet, die hier auch als eine Powerlineübertragung ausgeführt ist, d.h. die Energie die bei Zündpillenstecker 1 über den Bus 6 erhält, wird über die Leitung 2 an den Sensor 11 weitergegeben, so dass auch der Sensor 11 mit elektrischer Energie versorgt ist. Durch eine Modulation eines Gleichstroms, der als Energieversorgung wirkt, werden die Sensorsignale zu der Auswerteschaltung 9 übertragen. Es ist hier möglich, dass mehr als ein Sensor an die Auswerteschaltung 9 angeschlossen ist. Es ist auch möglich, dass mehr als eine Zündpille 10 an die Zündkreiselektronik 8 angeschlossen ist.

Die Auswerteschaltung 9 wertet die Sensorsignale des Sensors 11 aus, beispielsweise in Bezug auf einen vorgegebenen Schwellwert, um ein Zündsignal zu erlauben oder zu sperren. Dieses Signal wird hier der Zündkreiselektronik 8 übergeben, so dass die Zündkreiselektronik 8 bei einem empfangenen Zündbefehl über den Bus 6 und die Busschnittstellenelektronik 7 verifizieren kann, ob tatsächlich ein Auslösefall vorliegt. Dazu wird dann in der Zündkreiselektronik 8 eine Verknüpfungsschaltung verwendet. Die Auswerteschaltung 9 überträgt weiterhin die ausgewählten Sensorsignale über die Busschnittstellenelektronik 7 und die Busanbindung 3 an den Bus 6 beispielsweise zurück an das Steuergerät für Rückhaltemittel, so dass das Steuergerät für Rückhaltemittel auch diese Sensorinformationen auswerten kann. Dies ist z.B. für ein Auslösealgorithmus, der im Steuergerät berechnet wird, von Vorteil. Es ist denkbar, dass in einem Bussystem für Rückhaltemittel das Steuergerät als Busmaster wirkt und die einzelnen Zündpillenstecker 1 wie hier dargestellt als Slaves.

Die Zündkreiselektronik 8 übermittelt über die Busschnittstelle 7 und dem Bus 6 Statusinformationen über die Zündpille 10. Dazu weist die Zündkreiselektronik 8 Mittel zur Überwachung der Funktion der Zündpille 10 auf. Es wird hier insbesondere der Widerstand der Zündpille 10 überwacht, so dass die Funktionsfähigkeit der Zündpille 10 dem Rückhaltesystem bekannt ist. Dabei wird ein vorgegebener Strom durch die Zündpille getrieben, um anhand der über der Zündpille 10 abgefallenen Spannung den Widerstand der Zündpille zu ermitteln. Weitere Funktionen der Zündkreiselektronik 8 sind im Auslösefall die Ansteuerung der Zündpille 10 mit der Auslöseenergie. Es muss dann das Zündmittel, hier die Zündpille 10, gezündet werden.

Über ein Statusregister erkennt die Zündkreiselektronik 8, in welchem Zustand sich bei der letzten Messung die Zündpille 10 befunden hat. Über den Zündkreis wird die Zündpille 10 gezündet. Eine Verknüpfungsschaltung von einem empfangenen Zündbefehl über den Bus 6 und einem Ausgangssignal der Auswerteschaltung 9 sorgt dafür, dass eine Plausibilisierung des Zündbefehls erfolgt.

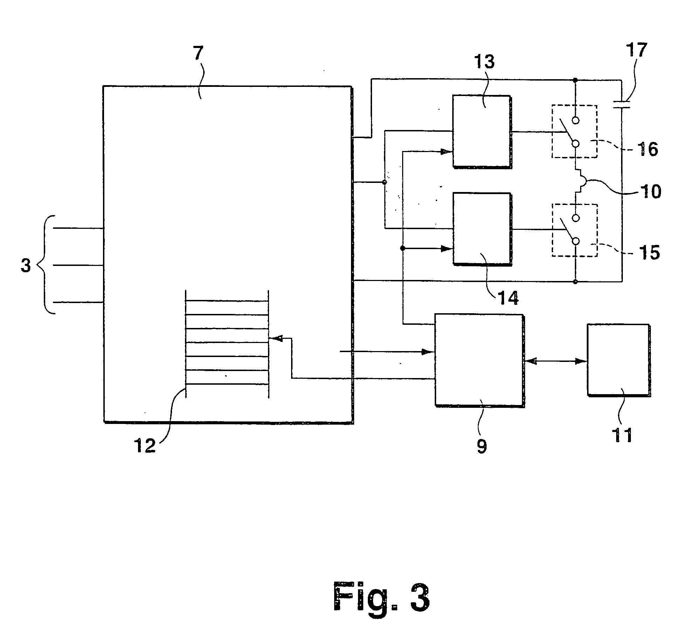

In Figur 3 ist in einem zweiten Blockschaltbild die erfindungsgemäße Vorrichtung dargestellt. Die Busanbindung erfolgt hier über drei Leitungen, zwei Datenleitungen A und B sowie eine Masseleitung Ground, hier mit GND bezeichnet. Die Busschnittstelle 7 weist ein Register 12 auf, indem ein Status des Zündkreises und ein Status des Sensors abgelegt sind. Diese Daten können dann dem Steuergerät zugänglich gemacht werden, um die Funktionalität dieser Komponenten mitzuteilen. An die Busschnittstelle 7 ist über eine erste Leitung ein Schalter SS und ein Kondensator ER 17 angeschlossen. Über eine zweite Leitung sind die jeweils ersten Eingänge von Und-Gattern 13 und 14 angeschlossen. Über eine dritte Leitung ist ein Schalter 15 und die andere Seite des Kondensators 17 angeschlossen. Über eine vierte Leitung erfolgt eine Steuerung der Auswerteelektronik 9 und über eine fünfte Leitung, hier als ein Dateneingang, wird das Register 12 beschrieben. Die Auswerteelektronik 9 weist einen zweiten Datenausgang auf, der an die jeweils zweiten Eingänge der Und-Gatter 13 und 14 führt. Über einen Datenein- /ausgang ist die Auswerteelektronik 9 mit dem Sensor 11 verbunden, von dem die Sensorsignale abgefragt werden, wobei über diese Verbindung auch die Versorgung für den Sensor 11 erfolgt.

Weiterhin gibt der Sensor 11 Daten darüber ab, ob er noch funktionstüchtig ist. Der Ausgang des Und-Gatters 13 schaltet den Schalter HSS 16, während der Ausgang des Und-Gatters 14 den Schalter LSS 15 der Zündkreise betätigt. Sind beide Schalter 15 und 16 geschlossen, dann kann die Zündpille 10 ZP gezündet werden. Diese Ansteuerung erfolgt nur im Auslösefall, also wenn die Und-Gatter 13 und 14 jeweils eine logische Eins abgeben, wobei dann beide Eingänge der Und-Gatter eine logische Eins aufweisen müssen. Diese logische Eins wird nur dann ausgewiesen, wenn ein Zündbefehl über den Bus 6 empfangen wurde, und die Auswerteelektronik 9 einen solchen Auslösefall erlaubt.

## Patentansprüche

1. Vorrichtung zum Anschluss an eine Leitung (3), wobei die Vorrichtung (1) über die Leitung (3, 6) mit einem Steuergerät für Rückhaltemittel verbunden ist, wobei die Vorrichtung (1) in einem Gehäuse (1) Verbindungsmittel (3, 7) zum Anschluss an die Leitung (6) aufweist, **dadurch gekennzeichnet, dass** die Verbindungsmittel (7) eine Schnittstellenelektronik (7) aufweisen, dass die Vorrichtung (1) mit einem Sensor (11) verbindbar ist, wobei im Gehäuse (1) eine Auswerteschaltung (9) für ein Signal vom Sensor (11) angeordnet ist und dass im Gehäuse (1) eine Zündkreiselektronik (8) vorhanden ist, die mit der Auswerteschaltung (9) derart verbunden ist, dass die Zündkreiselektronik (8) verifizieren kann, ob ein Auslösefall vorliegt, wobei die Vorrichtung (1) mit wenigstens einer Zündpille (10) verbindbar ist.

2. Vorrichtung nach Anspruch 1, **dadurch gekennzeichnet, dass** die Schnittstellenelektronik (7) zum Anschluss an einen Bus (6) ausgebildet ist, wobei die Schnittstellenelektronik (7) einen Sender, einen Empfänger, wenigstens ein Register (12) und eine Ablaufsteuerung aufweist.

3. Vorrichtung nach Anspruch 2, **dadurch gekennzeichnet, dass** bei einer Ausbildung des Busses als Daisy Chain die Schnittstellenelektronik (7) einen Daisy Chain-Schalter aufweist.

4. Vorrichtung nach Anspruch 1, **dadurch gekennzeichnet, dass** die Zündkreiselektronik (8) wenigstens eine Zündbrückenschaltung, ein Statusregister, wenigstens einen Zündkreis und eine Verknüpfungsschaltung für einen empfangenen Zündbefehl und ein Ausgangssignal von der Auswerteschaltung (9) aufweist.

## Claims

1. Apparatus for connection to a line (3), wherein the apparatus (1) is connected to a controller for restraint means via the line (3, 6), wherein the apparatus (1) in a housing (1) has means (3, 7) for connection to the line (6), **characterized in that** the connecting means (7) have interface electronics (7), **in that** the apparatus (1) can be connected to a sensor (11), an evaluation circuit (9) for a signal from the sensor (11) being arranged in the housing (1), and **in that** the housing (1) contains ignition-circuit electronics (8) which are connected to the evaluation circuit (9) in such a way that the ignition-circuit electronics (8) can verify whether triggering is necessary, it being possible to connect the apparatus (1) to at least one firing cap (10).

2. Apparatus according to Claim 1, **characterized in that** the interface electronics (7) are designed for connection to a bus (6), the interface electronics (7) having a transmitter, a receiver, at least one register (12) and a sequence control system.

3. Apparatus according to Claim 2, **characterized in that** the interface electronics (7) have a daisy-chain switch when the bus is in the form of a daisy chain.

4. Apparatus according to Claim 1, **characterized in that** the ignition-circuit electronics (8) include at least one ignition bridge circuit, a status register, at least one ignition circuit, and a logic circuit for a received ignition command and an output signal from the evaluation circuit (9).

## Revendications

1. Dispositif de raccordement à une ligne (3), le dispositif (1) étant relié par le biais d'une ligne (3, 6) à un appareil de commande pour des moyens de retenue, le dispositif (1) présentant dans un boîtier (1) des moyens de liaison (3, 7) pour le raccordement à la ligne (6),
**caractérisé en ce que**
les moyens de liaison (7) présentent un système électronique d'interface (7), le dispositif (1) peut être relié à un capteur (11), un circuit d'exploitation (9) pour un signal du capteur (11) est disposé dans le boîtier (1), et le boîtier (1) comprend un système électronique de circuit de déclenchement (8) relié au circuit d'exploitation (9) de telle sorte que le système électronique de circuit de déclenchement (8) peut vérifier si l'on est en présence d'un cas de déclenchement, le dispositif (1) pouvant être relié à au moins une amorce (10).

2. Dispositif selon la revendication 1,
**caractérisé en ce que**
le système électronique d'interface (7) est configuré pour être raccordé à un bus (6), le système électronique d'interface (7) présentant un émetteur, un récepteur, au moins un registre (12) et une commande séquentielle.

3. Dispositif selon la revendication 2,
**caractérisé en ce que**
pour une configuration du bus en guirlande, le système électronique d'interface (7) présente un commutateur pour connexion en guirlande.

4. Dispositif selon la revendication 1,
**caractérisé en ce que**
le système électronique de circuit de déclenchement (8) présente au moins un circuit de déclenchement à pont, un registre d'état, au moins un circuit de déclenchement et un circuit d'association pour un ordre de déclenchement reou et un signal de sortie provenant du circuit d'exploitation (9).
